(19) Europäisches Patentamt
European Patent Office
Office européen des brevets

(11) Veröffentlichungsnummer : **0 414 170 B1**

# (12) EUROPÄISCHE PATENTSCHRIFT

(45) Veröffentlichungstag der Patentschrift :
**23.02.94 Patentblatt 94/08**

(51) Int. Cl.$^5$ : **B01D 53/34,** B01D 53/14

(21) Anmeldenummer : **90115861.8**

(22) Anmeldetag : **18.08.90**

## (54) Wässrige Aldehydlösungen zum Abfangen von Schwefelwasserstoff.

(30) Priorität : **23.08.89 DE 3927763**

(43) Veröffentlichungstag der Anmeldung :
**27.02.91 Patentblatt 91/09**

(45) Bekanntmachung des Hinweises auf die Patenterteilung :
**23.02.94 Patentblatt 94/08**

(84) Benannte Vertragsstaaten :
**AT DE DK FR GB NL**

(56) Entgegenhaltungen :
**EP-A- 0 193 327**
**US-A- 1 991 765**
**US-A- 4 541 946**

(73) Patentinhaber : **HOECHST AKTIENGESELLSCHAFT**
**D-65926 Frankfurt (DE)**

(72) Erfinder : **Hoffmann, Hermann, Dr.**
**In den Padenwiesen 13**
**D-6233 Kelkheim (Taunus) (DE)**
Erfinder : **Mabire, Frederic, Dr.**
**35, Avenue Laplace**
**F-94110 Arcueil (FR)**

EP 0 414 170 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Anwesenheit von Schwefelwasserstoff im Roherdgas bzw. im Roherdölgas als auch in den begleitenden wäßrigen oder Kohlenwasserstoffphasen ist im allgemeinen höchst unerwünscht. Schwefelwasserstoff ist hochtoxisch und führt zu wasserstoffinduzierter Sprödigkeit bei üblicherweise verwendeten Kohlenstoffstählen und zur Spannungsrißkorrosion bei höherlegierten Werkstoffen. Aus diesen Gründen versucht man mit allen Mitteln den Schwefelwasserstoff in solchen Systemen auszuwaschen bzw. chemisch umzuwandeln.

Es existieren deswegen für die Reinigung von Rohgasen verschiedene physikalische und auch chemische Verfahrensprozesse, die je nach Gehalt des Rohgases an Schwefelwasserstoff und Begleitstoffen und den Anforderungen an die Reinheit des Endproduktes in unterschiedlichem Maße wirtschaftliche Vor- und Nachteile bieten, wobei die chemischen Verfahren naturgemäß nur bei geringen Gehalten an Schwefelwasserstoff sinnvoll anwendbar sind. Ein solcher Fall liegt z.B. bei Erdgas oder Erdölgas mit geringen Gehalten an Schwefelwasserstoff vor.

Eine weit verbreitete Forderung an die Reinheit von Erdgas für Verbrauchernetze ist ein Gehalt von 6 $mg/Nm^3$ Schwefelwasserstoff. Zur Erfüllung dieser Forderung können mehrere Verfahren benutzt werden. Auf Erdölplattformen in offenen Gewässern sind aus Gewichtsgründen jedoch nicht alle Verfahren möglich. In manchen Fällen wurde bei Betrieb der Förderplattform das Vorkommen von Schwefelwasserstoff überhaupt erst mit der Zeit beobachtet. Der nachträgliche Einbau von z.B. Waschanlagen auf Basis einer wäßrigen Alkanolaminlösung ist aus Gewichtsgründen dann nicht mehr möglich. Der einzig bleibende Weg ist in diesen Fällen die Verwendung von Schwefelwasserstofffängern, wobei die Reaktion im wesentlichen in der wäßrigen Phase stattfindet, wenn auch die Injektion in das Dreiphasengemisch Erdöl/Lagerstättenwasser/Gasphase, das am Kopf einer Fördersonde vorliegt, bevorzugt wird.

Die Verwendung von Aldehyden zum Abfangen von Schwefelwasserstoff ist seit längerem bekannt. So wird in der US-Patentschrift US-A-1991765 die Reaktion von Schwefelwasserstoff und einem Aldehyd zwischen pH-Werten von 2-12 bei Temperaturen von 20-100°C beschrieben. Insbesondere bei pH-Werten um 2 oder tiefer wird die Reaktion von Formaldehyd, Glyoxal, Acrolein und anderen Aldehyden in Zusammenhang mit der Auflösung von Eisensulfid enthaltenden Verunreinigungen durch Säurebehandlung wiederholt beschrieben (z.B. US-Patentschriften 2606873, 3514410, 3585069, 3669613, 4220500, 4289639, 4310435 und 4680127).

Von all diesen Aldehyden hat insbesondere Glyoxal als Schwefelwasserstofffänger Eingang in die Erdöl- und Erdgasindustrie gefunden, da mit Glyoxal ein wasserlösliches Reaktionsprodukt entsteht, während im Falle von Formaldehyd Trithian als schlecht wasserlösliches cyclisches Kondensationsprodukt entsteht. Deshalb ist Glyoxal gegenüber Formaldehyd aus technischen Gründen, gegenüber anderen kommerziellen Dialdehyden wie insbesondere Glutaraldehyd hingegen aus Gründen der Wirtschaftlichkeit im Vorteil.

Eine wichtige Forderung bei der Verwendung von Schwefelwasserstofffängern besteht darin, daß die Produkte nicht die Korrosion der Erdöl- oder Erdgas-förderanlagen verstärken. Es wurde nun gefunden, daß man die Korrosionsrate auf Stahl bei wäßrigen Aldehydlösungen vermindern kann, wenn man der Aldehydlösung ein langkettiges quartäres Ammoniumsalz, ein Fettsäure-Polyethylenpolyamin-Kondensationsprodukt oder eine Mischung dieses Kondensationsprodukts mit einem nicht-ionischen oder anionischem Tensid zugibt.

Gegenstand der Erfindung ist somit eine wäßrige Aldehydlösung zum Abfangen von Schwefelwasserstoff enthaltend 5 bis 50 Gew.-% eines Aldehyds und zusätzlich 1 bis 5 Gew.-%, bezogen auf die Aldehydlösung, einer Formulierung, bestehend aus

a) 10 bis 80 Gew.-% einer quartären Ammoniumverbindung der Formel

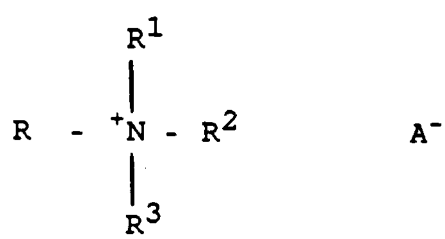

worin
R $C_8$-$C_{22}$-Alkyl oder $C_8$-$C_{22}$-Alkenyl,
$R^1$ $C_1$-$C_{22}$-Alkyl oder $C_8$-$C_{22}$-Alkenyl,
$R^2$ $C_1$-$C_4$-Alkyl oder Benzyl,

$R^3$ $C_1$-$C_4$-Alkyl und
A Chlorid, Bromid oder Methosulfat
bedeuten,
und 20 bis 90 Gew.-% Wasser oder eines $C_1$-$C_4$-Alkohols,

b) 10 bis 80 Gew.-% eines gegebenenfalls quarternierten Esters von oxalkylierten Alkyl-alkylendiaminen, erhalten durch Veresterung von oxalkylierten Alkylalkylendiaminen der Formel

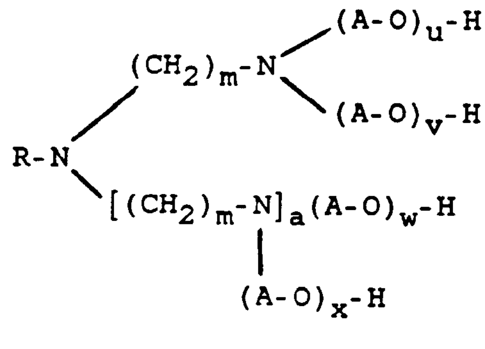

wobei R $C_8$-$C_{24}$-Alkyl oder $C_8$-$C_{24}$-Alkenyl, A eine Gruppe der Formel $-C_2H_4-$ oder $-C_3H_6-$ bedeuten, a 0 oder 1 ist, m 2 oder 3 ist, u, v, w und x Zahlen sind, deren Summe für den Fall a=0 3 bis 30, vorzugsweise 10 bis 30, und für den Fall a=1 4 bis 40, vorzugsweise 20 bis 40 betragen, mit Säuren der Formel

$$HOOC-R^1-(COOH)_n$$

wobei n 0 oder 1 ist und $R^1$ für den Fall n= 0 Alkyl, Alkenyl, Cycloalkyl oder Cycloalkenyl mit jeweils 5 bis 35 C-Atomen oder $R^1$ für den Fall n= 1 den Rest einer dimeren Fettsäure bedeutet, und gegebenenfalls anschließende Quaternierung unter Bildung von Gruppierungen der Formel

$$>\overset{\oplus}{N}-R^2\ M^{\ominus},$$

wobei $R^2$ $C_1$-$C_4$-Alkyl oder Benzyl und $M^{\ominus}$ ein Halogenid- oder Methosulfat-Anion bedeuten, und 20 bis 90 Gew.-% Wasser oder eines $C_1$-$C_4$-Alkohols,

c) 10 bis 80 Gew.-% eines Kondensationsproduktes aus $C_{12}$-$C_{18}$-Fettsäure und einem Polyethylenpolyamin der Formel

$$NH_2-(C_2H_4-NH)_x-C_2H_4-NH_2$$

wobei x, 1, 2 oder 3 bedeutet und wobei das Mol-Verhältnis von Fettsäure zu basischem Stickstoff im Polyethylenpolyamin 3 : 1 bis 3 : 2 beträgt, und 20 bis 90 Gew.-% Wasser oder eines $C_1$-$C_4$-Alkohols, oder

d) 50 bis 95 Gew.-% des Fettsäure-Polyethylenpolyamin-Kondensationsprodukts wie unter c) definiert und 5 bis 50 Gew.-% eines nicht-ionischen oder anionischen Tensids.

Für die erfindungsgemäßen wäßrigen Lösungen kommen vorzugsweise alle leicht verfügbaren, wasserlöslichen Aldehyde in Frage wie beispielsweise Formaldehyd, Glyoxal, Glutaraldehyd, Acrolein oder Gemische dieser Aldehyde. Insbesondere ist Glyoxal bevorzugt. Der wäßrigen Lösung dieser Aldehyde wird die zuvor beschriebene Formulierung einer quartären Ammoniumverbindung, eines Kondensationsprodukts aus einer Fettsäure und einem Polyethylenpolyamin oder einer Mischung dieses Kondensationsprodukts mit einem Tensid zugesetzt.

Die in den Formulierungen a), b) und c) benutzten Produkte sind hinlänglich bekannt und als Handelsprodukte verfügbar. Die Produkte unter b) werden beispielsweise erhalten durch Umsetzung von Triethylentetramin oder Tetraethylenpentamin mit Fettsäuren wie Ölsäure, Tallölfettsäure, Sojaölfettsäure oder Laurinsäure. Als Fettsäuren kommen hier auch Naphthensäuren vom Molgewicht 250-350 in Frage. Als nichtionische Tenside in der Formulierung c) kommen oxethylierte Fettalkohole oder oxethylierte Alkylphenole mit einem Gehalt von jeweils 4 bis 30 Ethylenoxid-Einheiten in Frage. Als anionische Tenside kommen beispielsweise in Frage Fettsäure-salze, Alkansulfonate, Alkylsulfate, Alkylbenzolsulfonate oder Fettsäureester von Cocosalkyl- oder Talgfettalkylpropylendiamin-polyglykolethern.

Die erfindungsgemäße Lösung wird bei der Rohölförderung am Sondenkopf zugegeben. Die zugegebene Menge ist abhängig vom $H_2S$-Gehalt. Üblicherweise wird man die Aldehydlösung in einer solchen Menge zudosieren, daß vier Mol Aldehyd auf 1 Mol $H_2S$ kommen.

**Beispiele**

Als Modellsystem zur Bestimmung der Korrosionsrate diente ein Erdöllagerstättenwasser aus der Nordsee mit folgender Zusammensetzung: $Na^+$ 9000 mg/l, $K^+$ 200 mg/l, $Ca^{++}$ 250 mg/l, Ba 60 mg/l, $Sr^{++}$ 25 mg/l, $Cl^-$ 14300 mg/l, $HCO_3^-$ 1050 mg/l. Dieses Wasser wurde sorgfältig durch einstündiges Durchleiten von reinem Stickstoff von Sauerstoffspuren befreit und durch kurzfristiges Einleiten von gasförmigem Schwefelwasserstoff auf eine bestimmte Konzentration an $H_2S$ gebracht. In einer separaten Vorratsflasche wurde Petroleum durch Durchleiten von reinem Stickstoff ebenfalls sauerstoffrei gemacht. Der Korrosionsversuch wurde an Blechstreifen aus Baustahl DIN 1.1203 von 75x10/1 mm durchgeführt. Die Coupons wurden in üblicher Weise mit Scheuermitteln sorgfältig von der Oxidhaut befreit, mit Wasser und Aceton gespült, getrocknet und auf 0,1 mg genau ausgewogen.

Die Coupons wurden in 100 ml Schraubflaschen gegeben, mit 90 ml des oben beschriebenen schwefelwasserstoffhaltigen Lagerstättenwassers und 10 ml Petroleum überschichtet, unter einem Stickstoffstrom verschlossen und in einer Testwaschmaschine 24 h mit 30 Upm bei 70°C rotiert. Als Maß für die Korrosionsrate kann der Gewichtsverlust pro Coupon in mg genommen werden. 1 mg Gewichtsverlust entspricht unter den gewählten Bedingungen $30{,}48.10^{-6}$ mpy (meter per year) (1,2 mpy; mils, tausendstel Zoll pro Jahr).
Einer Korrosionsrate von 1 mm/a würde ein Abtrag von 481 mg entsprechen. Die aufgeführten Zahlen in Tabelle 1 stellen Mittelwerte von Meßpunkten mit Streuungen von maximal ± 5 % dar.

**Beispiel 1**

In einem Lagerstättenwasser der erwähnten Zusammensetzung, das zuerst mit $CO_2$ gesättigt wurde und dem dann 200 ppm Schwefelwasserstoff sowie 2000 ppm 40 %ige wäßrige Glyoxallösung zugesetzt worden war, wurde nach der oben beschriebenen Methode ein Abtrag von 20,5 mg beobachtet. Parallel durchgeführte Versuche mit Zugaben von 30 bzw. 100 ppm der jeweils angegebenen Verbindungen erbrachten folgende Abträge in mg bei 24 h/70°C im System Wasser/Petroleum 9 : 1 an C-Stahl-Coupons von 75x10/1 mm:

| | 30 ppm | 100 ppm |
|---|---|---|
| a) Cocosalkylbenzyldimethylammoniumchlorid (50 % in Wasser) | 0,9 | 0,4 |
| b) Kondensationsprodukt aus 3,3 Mol Tallölfettsäure und 1 Mol Tetraethylenpentamin (45 % in Isobutanol) | 3,7 | 2,8 |
| c) Talgfettpropylendiamin-polyglykolether (25 Mol Ethylenoxid) verestert mit Naphthensäure (50 % in Butylglykol) | 20,7 | 6,1 |
| d) Mischung aus 38 % eines Kondensationsprodukts aus 1 Mol Naphthensäure und 1 Mol Diethylentriamin, 12 % Tributylphenolpoly(50)glykolether, Rest Methanol und Wasser. | 2,9 | 0,7 |

Die Produkte a)-d) stellen Handelsprodukte dar. Die erhaltenen Reduzierungen der Korrosionsgeschwindigkeit sind z.T. beträchtlich, wobei einige Produkte diesen Effekt schon bei niedrigen Einsatzkonzentrationen zeigen.

**Beispiel 2**

Analog zu Beispiel 1 wurden Versuche unter Variation des Verhältnisses Glyoxal (40 %ig)/$H_2S$ durchgeführt. Die Abträge in mg ohne Additiv sind zum Vergleich aufgeführt. Der Gehalt an $H_2S$ betrug einheitlich 300 ppm.

| | 300 | 900 | 1500 | 3000 |
|---|---|---|---|---|
| | ppm Glyoxal (40 %ig) | | | |
| ohne | 11,1 | 16,5 | 17,2 | 43,9 |
| mit 50 ppm | 11,0 | 15,4 | 0,8 | 0,4 |

Additiv a) nach Beispiel 1

Dieses Beispiel zeigt, daß die Inhibierung der Korrosion erst bei höheren Verhältnissen Glyoxal/$H_2S$ einsetzt. Verhältnisse von größer als 10 : 1 Glyoxal (40 %)/$H_2S$ sind andererseits notwendig, um den gewünschten Effekt der Reaktion des Aldehyds mit Schwefelwasserstoff zu erzielen.

**Beispiel 3**

In einer 5 %igen Kochsalzlösung mit einem Gehalt von 2000 ppm Glyoxal (40 %ig) und 200 ppm $H_2S$ wurde nach der beschriebenen Versuchsdurchführung nach 24 Stunden ein Abtrag von 25,5 mg gemessen. Nachfolgend sind die entsprechenden Abträge nach 24 Stunden bei Zugabe folgender quartärer Ammoniumverbindungen angegeben

a) n-Dodecylbenzyldimethylammoniumchlorid
10 ppm 18,0
20 ppm 4,5
b) n-Octadecylbenzyldimethylammoniumchlorid
15 ppm 1,7
c) n-Dodecyltrimethylammoniumsulfat
15 ppm 20,5
50 ppm 5,5
d) n-Octadecyltrimethylammoniumsulfat
15 ppm 3,0
50 ppm 1,6
e) Sojaalkyltrimethylammoniumchlorid
15 ppm 1,0

Die Funktion des Schwefelwasserstoffängers darf durch die Anwesenheit der Additive nicht beeinträchtigt werden. Zur Kontrolle wurde die Geschwindigkeit der Reduktion des Schwefelwasserstoffs sowohl in einer wäßrigen Lösung als auch in einer Petroleumlösung gemessen, wobei sowohl in Gegenwart als auch in Abwesenheit eines Additivs Messungen durchgeführt wurden. Einheitlich wurden 200 mg/l Schwefelwasserstoff in die jeweiligen Phasen eingebracht und mit der 10-fachen Menge einer 40 %igen Glyoxallösung behandelt. Die prozentuale Verminderung des Gehaltes an $H_2S$ infolge Reaktion mit Glyoxal wurde mit einer potentiometrischen Methode verfolgt.

Im Falle der Petroleumphase wurde die Glyoxallösung zudosiert und ständig mit einem Magnetrührer gerührt. Zu unterschiedlichen Zeitpunkten wurden aliquote Teile entnommen und auf $H_2S$ analysiert. Die Ergebnisse sind in der folgenden Tabelle aufgeführt. Als Additiv wurde Verbindung a) aus Beispiel 1 in einer Konzentration von 90 ppm eingesetzt.

Wie aus den Zahlen abzulesen ist, führt die Gegenwart des Additivs nicht zu einer signifikanten Verminderung der Reaktionsgeschwindigkeit, sondern sogar im Falle der Reaktion in der Kohlenwasserstoffphase zu einer beträchtlichen Beschleunigung der Umsatzgeschwindigkeit.

Prozentuale Verminderung des Schwefelwasserstoffgehaltes nach Reaktion mit Glyoxal

| | Wasserphase | | Petroleumphase | |
|---|---|---|---|---|
| | ohne | mit | ohne | mit |
| 1 min. | 50 | 45 | 0 | 20 |
| 5 min. | 60 | 56 | 18 | 58 |
| 15 min. | 70 | 64 | 40 | 94 |
| 30 min. | 73 | 73 | 64 | 96 |

## Patentansprüche

1. Wäßrige Aldehydlösung zum Abfangen von Schwefelwasserstoff enthaltend 5 bis 50 Gew.-% eines Aldehyds und zusätzlich 1 bis 5 Gew.-%, bezogen auf die Aldehydlösung, einer Formulierung, bestehend aus

a) 10 bis 80 Gew.-% einer quartären Ammoniumverbindung der Formel

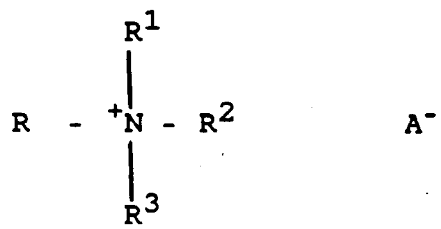

worin
R $C_8$-$C_{22}$-Alkyl oder $C_8$-$C_{22}$-Alkenyl,
$R^1$ $C_1$-$C_{22}$-Alkyl oder $C_8$-$C_{22}$-Alkenyl,
$R^2$ $C_1$-$C_4$-Alkyl oder Benzyl,
$R^3$ $C_1$-$C_4$-Alkyl und
A Chlorid, Bromid oder Methosulfat
bedeuten,
und 20 bis 90 Gew.-% Wasser oder eines $C_1$-$C_4$-Alkohols,

b) 10 bis 80 Gew.-% eines gegebenenfalls quarterniertes Esters von oxalkylierten Alkyl-alkylendiaminen, erhalten durch Veresterung von oxalkylierten Alkylalkylendiaminen der Formel

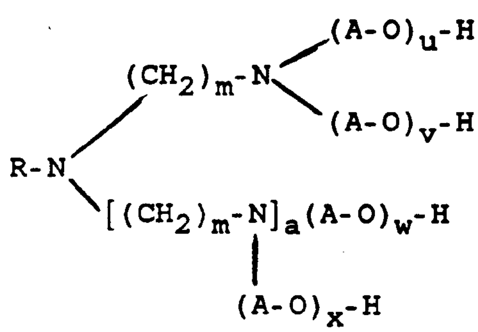

wobei R $C_8$-$C_{24}$-Alkyl oder $C_8$-$C_{24}$-Alkenyl, A eine Gruppe der Formel $-C_2H_4-$ oder $-C_3H_6-$ bedeuten, a 0 oder 1 ist, m 2 oder 3 ist, u, v, w und x Zahlen sind, deren Summe für den Fall a=0 3 bis 30, vorzugsweise 10 bis 30, und für den Fall a=1 4 bis 40, vorzugsweise 20 bis 40 betragen, mit Säuren der Formel

$$HOOC-R^1-(COOH)_n$$

wobei n 0 oder 1 ist und $R^1$ für den Fall n= 0 Alkyl, Alkenyl, Cycloalkyl oder Cycloalkenyl mit jeweils 5 bis 35 C-Atomen oder $R^1$ für den Fall n= 1 den Rest einer dimeren Fettsäure bedeutet, und gegebenenfalls anschließende Quaternierung unter Bildung von Gruppierungen der Formel

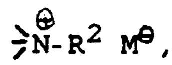

wobei $R^2$ $C_1$-$C_4$-Alkyl oder Benzyl und $M^{\ominus}$ ein Halogenid- oder Methasulfat-Anion bedeuten,
und 20 bis 90 Gew.-% Wasser oder eines $C_1$-$C_4$-Alkohols,

c) 10 bis 80 Gew.-% eines Kondensationsproduktes aus $C_{12}$-$C_{18}$-Fettsäure und einem Polyethylenpolyamin der Formel

$$NH_2-(C_2H_4-NH)_x-C_2H_4-NH_2$$

wobei x, 1, 2 oder 3 bedeutet und wobei das Mol-Verhältnis von Fettsäure zu basischem Stickstoff im Polyethylenpolyamin 3 : 1 bis 3 : 2 beträgt, und 20 bis 90 Gew.-% Wasser oder eines $C_1$-$C_4$-Alkohols,

oder

d) 50 bis 95 Gew.-% des Fettsäure-Polyethylenpolyamin-Kondensationsprodukts wie unter c) definiert und 5 bis 50 Gew.-% eines nicht-ionischen oder anionischen Tensids.

2. Verwendung der wäßrigen Lösung nach Anspruch 1 zum Abfangen von Schwefelwasserstoff in Ergas- und Erdölförderanlagen unter gleichzeitiger Verminderung der Korrosionsrate.

## Claims

1. An aqueous aldehyde solution for trapping hydrogen sulfide, containing 5 to 50% by weight of an aldehyde and additionally 1 to 5% by weight, relative to the aldehyde solution, of a formulation comprising

a) 10 to 80% by weight of a quaternary ammonium compound of the formula

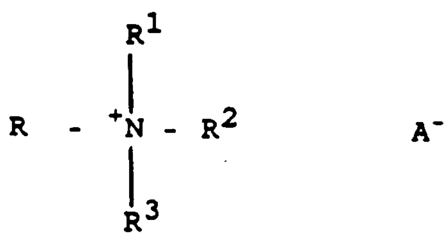

in which
R is $C_8$-$C_{22}$-alkyl or $C_8$-$C_{22}$-alkenyl,
$R^1$ is $C_1$-$C_{22}$-alkyl or $C_8$-$C_{22}$-alkenyl,
$R^2$ is $C_1$-$C_4$-alkyl or benzyl,
$R^3$ is $C_1$-$C_4$-alkyl and
A is chloride, bromide or methosulfate,

and 20 to 90% by weight of water or of a $C_1$-$C_4$-alcohol,

b) 10 to 80% by weight of an ester of oxalkylated alkylalkylenediamines, which may be quaternized and is obtained by esterification of oxalkylated alkylalkylenediamines of the formula

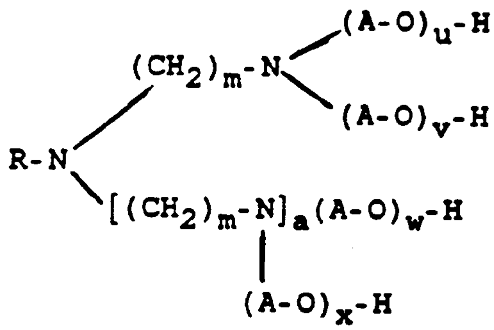

in which R is $C_8$-$C_{24}$-alkyl or $C_8$-$C_{24}$-alkenyl, A is a group of the formula $-C_2H_4-$ or $-C_3H_6-$, a is 0 or 1, m is 2 or 3, u, v, w and x are numbers whose sum is 3 to 30, preferably 10 to 30, in the case where a is 0, and 4 to 40, preferably 20 to 40, in the case where a is 1, with acids of the formula

$$HOOC\text{-}R^1\text{-}(COOH)_n$$

in which n is 0 or 1 and $R^1$ is alkyl, alkenyl, cycloalkyl or cycloalkenyl of 5 to 35 carbon atoms each, in the case where n is 0, or is the radical of a dimeric fatty acid, in the case where n is 1, and, if appropriate, subsequent quaternization with the formation of groupings of the formula

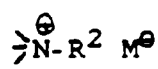 ,

in which $R^2$ is $C_1$-$C_4$-alkyl or benzyl and $M^{\ominus}$ is a halide or methosulfate anion, and 20 to 90% by weight of water or of a $C_1$-$C_4$-alcohol,

c) 10 to 80% by weight of a condensation product of a $C_{12}$-$C_{18}$-fatty acid with a polyethylene polyamine of the formula

$$NH_2\text{-}(C_2H_4\text{-}NH)_x\text{-}C_2H_4\text{-}NH_2$$

in which x is 1, 2 or 3 and the molar ratio of fatty acid to basic nitrogen in the polyethylene polyamine is 3 : 1 to 3 : 2, and 20 to 90% by weight of water or of a $C_1$-$C_4$-alcohol, or

d) 50 to 95% by weight of the fatty acid-polyethylene polyamine condensation product as defined in c) and 5 to 50% by weight of a nonionic or anionic surfactant.

2. Use of the aqueous solution as claimed in claim 1 for trapping hydrogen sulfide in natural gas and crude oil producing plants with simultaneous reduction of the corrosion rate.

## Revendications

1. Solution aqueuse d'aldéhyde pour absorber de l'hydrogène sulfuré, contenant de 5 à 50 % en poids d'un aldéhyde avec de 1 à 5 % en poids, par rapport à la solution d'aldéhyde, d'une formulation qui comprend :

a) 10 à 80 % en poids d'un composé d'ammonium quaternaire de formule :

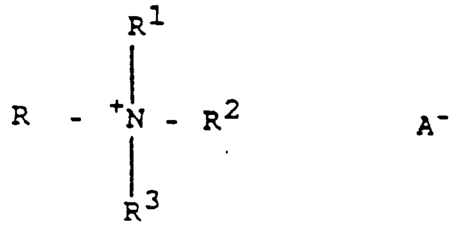

dans laquelle

R représente un alkyle en $C_8$-$C_{22}$ ou un alcényle en $C_8$-$C_{22}$,

$R^1$ un alkyle en $C_1$-$C_{22}$ ou un alcényle en $C_8$-$C_{22}$,

$R^2$ un alkyle en $C_1$-$C_4$ ou un benzyle,

$R^3$ un alkyle en $C_1$-$C_4$ et

A l'ion chlorure, bromure ou méthosulfate,
avec de 20 à 90 % en poids d'eau ou d'un alcool en $C_1$-$C_4$,
b) 10 à 80 % en poids d'un ester éventuellement quaternisé d'alkyl-alkylène-diamines oxalkylées, obtenu par estérification d'alkyl-alkylène-diamines oxalkylées de formule :

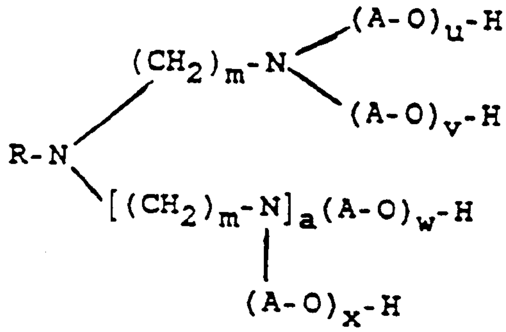

dans laquelle R désigne un alkyle en $C_8$-$C_{24}$ ou un alcényle en $C_8$-$C_{24}$, A un groupe $-C_2H_4-$ ou $-C_3H_6-$, a le nombre 0 ou 1, m le nombre 2 ou 3 et u, v, w et x sont des nombres dont la somme est de 3 à 30, de préférence de 10 à 30, si a = 0, et de 4 à 40, de préférence de 20 à 40, si a = 1, avec des acides de formule :

$$HOOC-R^1-(COOH)_n$$

n étant le nombre 0 ou 1 et $R^1$, si n = 0, un alkyle, un alcényle, un cycloalkyle ou un cycloalcényle ayant chacun de 5 à 35 atomes de carbone, ou bien si n = 1, le radical d'un acide gras dimère, puis le cas échéant quaternisation avec formation de groupes

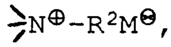

$R^2$ étant un alkyle en $C_1$-$C_4$ ou un benzyle et $M^{\ominus}$ un anion halogénure ou méthosulfate,
avec de 20 à 90 % en poids d'eau ou d'un alcool en $C_1$-$C_4$,
c) 10 à 80 % en poids d'un produit de condensation d'un acide gras en $C_{12}$-$C_{18}$ avec une polyéthylènepolyamine de formule :

$$NH_2-(C_2H_4-NH)_x-C_2H_4-NH_2$$

x étant le nombre 1, 2 ou 3 et le rapport molaire de l'acide gras à l'azote basique de la polyéthylènepolyamine étant compris entre 3:1 et 3:2, avec de 20 à 90 % en poids d'eau ou d'un alcool en $C_1$-$C_4$, ou bien
d) 50 à 95 % en poids du produit de condensation défini ci-dessus en c) de l'acide gras avec la polyéthylène-polyamine et 5 à 50 % en poids d'un agent surfactif non-ionique ou anionique.

**2.** Emploi de la solution aqueuse de la revendication 1 pour absorber l'hydrogène sulfuré dans des installations d'extraction de gaz naturel et de pétrole, tout en diminuant la vitesse de corrosion des installations.